# EUROPEAN PATENT APPLICATION

(11) **EP 4 494 724 A1**
(43) Date of publication of application: **22.01.2025**
(21) Application number: 23770133.9
(22) Date of filing: 30.01.2023
(51) Int. Cl.: A63F 13/798, A63F 13/35, A63F 13/533, A63F 13/79

(54) **SERVER DEVICE, METHOD FOR SKILL VALUE DERIVATION, METHOD FOR GROUPING, AND METHOD FOR PROVIDING INFORMATION**

(30) Priority: 14.03.2022 JP 2022039353
(71) Applicant: Sony Interactive Entertainment Inc., Tokyo 108-0075 (JP)
(72) Inventor: AMIMOTO Tatsuki, Tokyo 108-0075 (JP)
(74) Representative: D Young & Co LLP
(86) International application number: PCT/JP2023/002820
(87) International publication number: WO 2023/176171

(57) **Abstract**

A playing time acquiring section 212 acquires lengths of playing time of a plurality of users for an activity from event data representing a start of the activity and event data representing an end of the activity. A statistical processing section 220 generates distribution of playing time for each activity, in reference to the acquired plurality of lengths of playing time. A skill value deriving section 214 derives a skill value of each user for the activity, in reference to the playing time of each user for the relevant activity and the distribution of the playing time for the relevant activity. A classifying portion 228 classifies a plurality of activities into groups. The skill value deriving section 214 derives a player skill value of each user concerning game play for each activity group, in reference to a plurality of skill values which are derived for the plurality of activities.

## Description

### [Technical Field]

The present disclosure relates to a technique for processing event data concerning a game activity performed by a user.

### [Background Art]

In recent years, a cloud game service has become popular, in which a player transmits information regarding an operation input by the player to a game server and the game server generates a game video and a game sound in response to the information regarding the operation to transmit them to a terminal device of the player. In the cloud game service, since the game server entirely manages game play, analyzing states of playing an activity by a player allows for improvement in game scenario or the like.

Meanwhile, a currently-used console game does not output information indicating a state of game play to the outside, and accordingly, it is not possible for the server side to analyze a play state of a player. In view of this, it is preferable that, also in the console game, various kinds of information regarding game play be transmitted to the server, making it possible for the server to analyze a play state for an activity.

### [Summary]

### [Technical Problem]

Establishing an environment in which the server can collect states of playing an activity by a plurality of players makes it possible to statistically process lengths of playing time of players for an activity. In view of this, it has been demanded to establish a scheme for providing useful information regarding playing time to a user who has not yet performed an activity.

The present disclosure has an object to realize a scheme for providing information regarding playing time for an activity.

### [Solution to Problem]

In order to solve the above problem, a server device according to an aspect of the present disclosure is a server device which derives a skill value of a user concerning game play, including an event data recording section which records pieces of event data concerning an activity performed by a plurality of users, a playing time acquiring section which acquires lengths of playing time of the plurality of users for the relevant activity from event data representing a start of the activity and event data representing an end of the activity, each piece of event data being recorded in the event data recording section, a statistical processing section which generates distribution of playing time for each activity, in reference to the acquired plurality of lengths of playing time, a skill value deriving section which derives a skill value of each user for an activity, in reference to the playing time of each user for the relevant activity and the distribution of the playing time for the relevant activity, and a classifying portion which classifies a plurality of activities into groups. The skill value deriving section derives a player skill value of each user concerning the game play for each activity group, in reference to a plurality of skill values which are derived for the plurality of activities.

A server device according to another aspect of the present disclosure is a server device which classifies a plurality of activities into groups, including an event data recording section which records pieces of event data concerning an activity performed by a plurality of users, a playing time acquiring section which acquires lengths of playing time of the plurality of users for the relevant activity from event data representing a start of the activity and event data representing an end of the activity, each piece of event data being recorded in the event data recording section, a statistical processing section which generates distribution of playing time for each activity, in reference to the acquired plurality of lengths of playing time, a skill value deriving section which derives a skill value of each user for an activity, in reference to the playing time of each user for the relevant activity and the distribution of the playing time for the relevant activity, and a classifying portion which classifies a plurality of activities into groups. The skill value deriving section derives a player skill value of each user concerning game play, in reference to a plurality of skill values which are derived for the plurality of activities, and the classifying portion calculates a difference between each of the skill values of the plurality of users which are derived for each activity and each of the player skill values of the plurality of users, and classifies the plurality of activities into groups, in reference to a plurality of the differences calculated for each activity.

A server device according to still another aspect of the present disclosure is a server device which provides a user with information concerning an estimated playing time, including a classifying portion which classifies a plurality of activities into groups, a skill value deriving section which derives a skill value of the user for an activity which has been played by the user, and the skill value deriving section deriving a player skill value of the user concerning game play for each activity group, in reference to a plurality of skill values which are derived for the plurality of activities. The server device further includes a class sorting portion which sets a class of the user for each activity group, in reference to the player skill value which is derived for each activity group, and a notifying portion which notifies the user of information concerning estimated playing time associated with the class to which the user belongs.

A skill value deriving method according to yet another aspect of the present disclosure is a skill value deriving method of deriving a skill value of a user concerning game play, including a step of acquiring lengths of playing time of a plurality of users for an activity from event data representing a start of the activity and event data representing an end of the activity, a step of generating distribution of playing time for each activity, in reference to the acquired plurality of lengths of playing time, a step of deriving a skill value of each user for an activity, in reference to the playing time of each user for the relevant activity and the distribution of the playing time for the relevant activity, a step of classifying a plurality of activities into groups, and a step of deriving a player skill value of each user concerning the game play for each activity group, in reference to a plurality of skill values which are derived for the plurality of activities.

A classifying method according to a further aspect of the present disclosure is a classifying method of classifying a plurality of activities into groups, including a step of acquiring lengths of playing time of a plurality of users for an activity from event data representing a start of the activity and event data representing an end of the activity, a step of generating distribution of playing time for each activity, in reference to the acquired plurality of lengths of playing time, a step of deriving a skill value of each user for an activity, in reference to the playing time of each user for the relevant activity and the distribution of the playing time for the relevant activity, a step of deriving a player skill value of each user concerning game play, in reference to a plurality of skill values which are derived for the plurality of activities, a step of calculating a difference between each of the skill values of the plurality of users which are derived for each activity and each of the player skill values of the plurality of users, and a step of classifying the plurality of activities into groups, in reference to a plurality of the differences calculated for each activity.

An information providing method according to a still further aspect of the present disclosure is a providing method of providing a user with information concerning an estimated playing time, including a step of classifying a plurality of activities into groups, a step of deriving a skill value of the user for an activity which has been played by the user, a step of deriving a player skill value of the user concerning game play for each activity group, in reference to a plurality of skill values which are derived for the plurality of activities, a step of setting a class of the user for each activity group, in reference to the player skill value which is derived for each activity group, and a step of notifying the user of information concerning estimated playing time associated with the class to which the user belongs.

Note that any combination of the abovementioned constituent elements and expressions of the present disclosure converted between methods, devices, systems, recording media, computer programs, and the like are also effective as the modes of the present disclosure.

### [Brief Description of Drawings]

[FIG. 1]

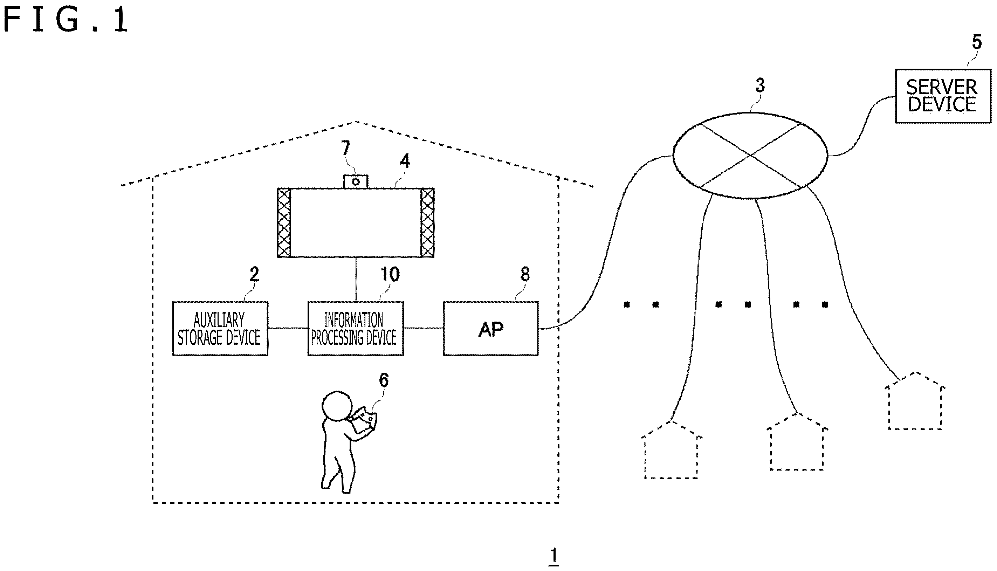

   FIG. 1 is a diagram illustrating an information processing system according to an embodiment.
[FIG. 2]

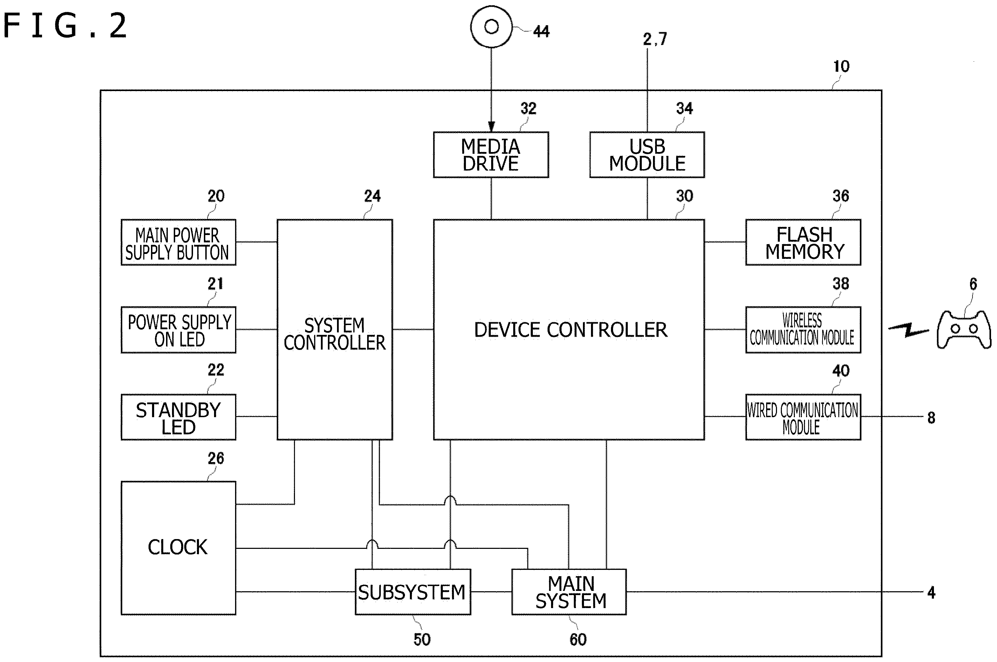

   FIG. 2 is a diagram illustrating a hardware configuration of an information processing device.
[FIG. 3]

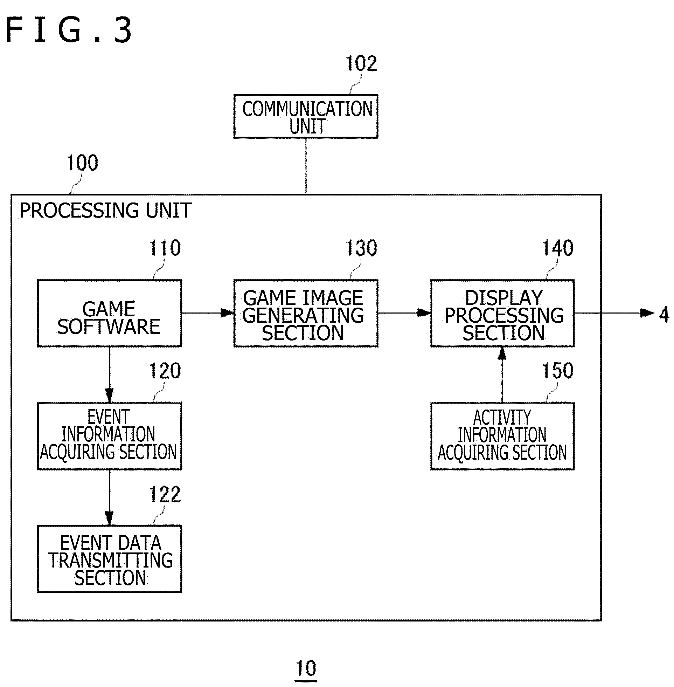

   FIG. 3 is a diagram illustrating functional blocks of the information processing device.
[FIG. 4]

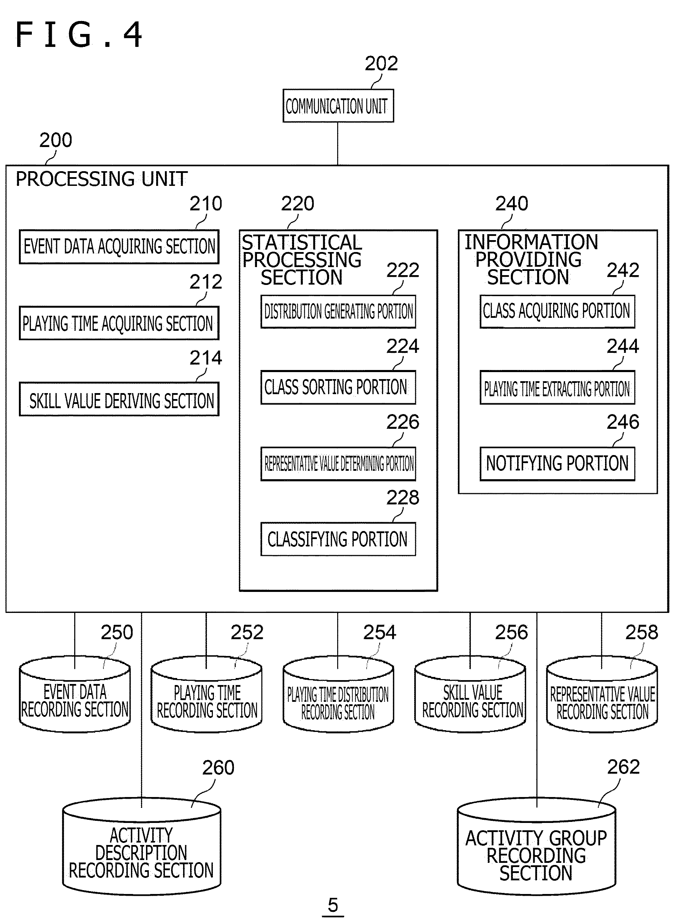

   FIG. 4 is a diagram illustrating functional blocks of a server device.
[FIG. 5]

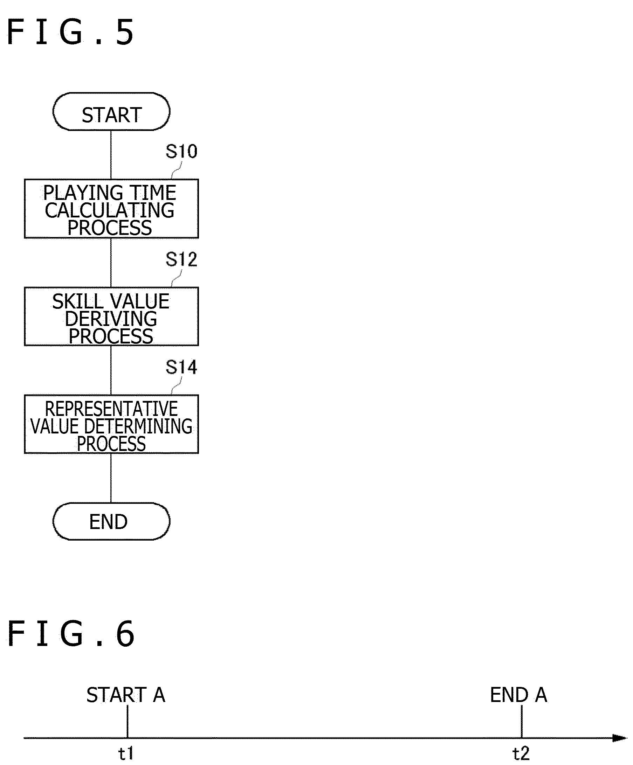

   FIG. 5 is a flowchart indicating a procedure of analyzing event data collected.
[FIG. 6]
   FIG. 6 is a diagram for explaining a calculation method of a length of playing time.
[FIG. 7]

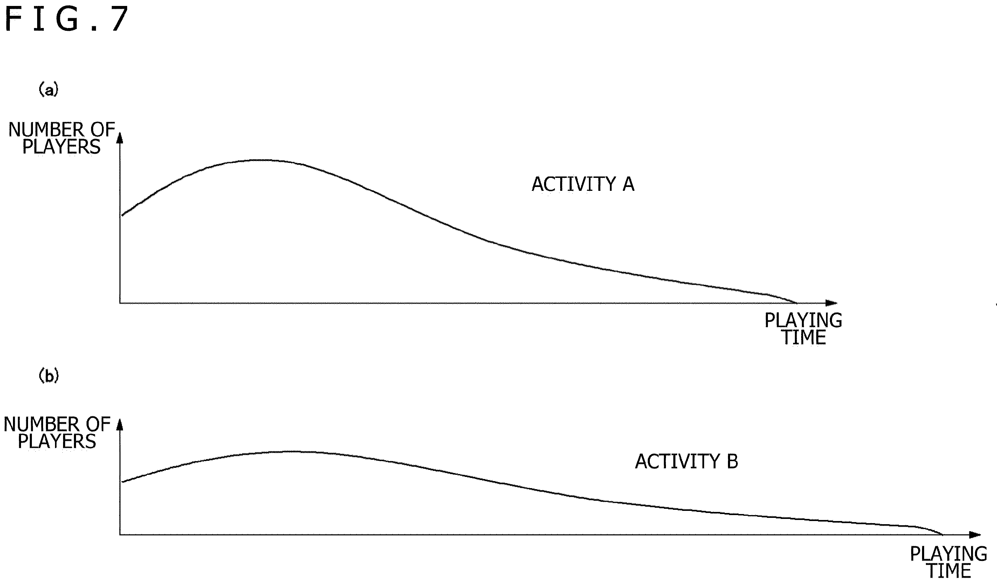

   FIG. 7 depicts graphs each representing a relation between a length of playing time and an activity, and the number of players who have executed the relevant activity.
[FIG. 8]

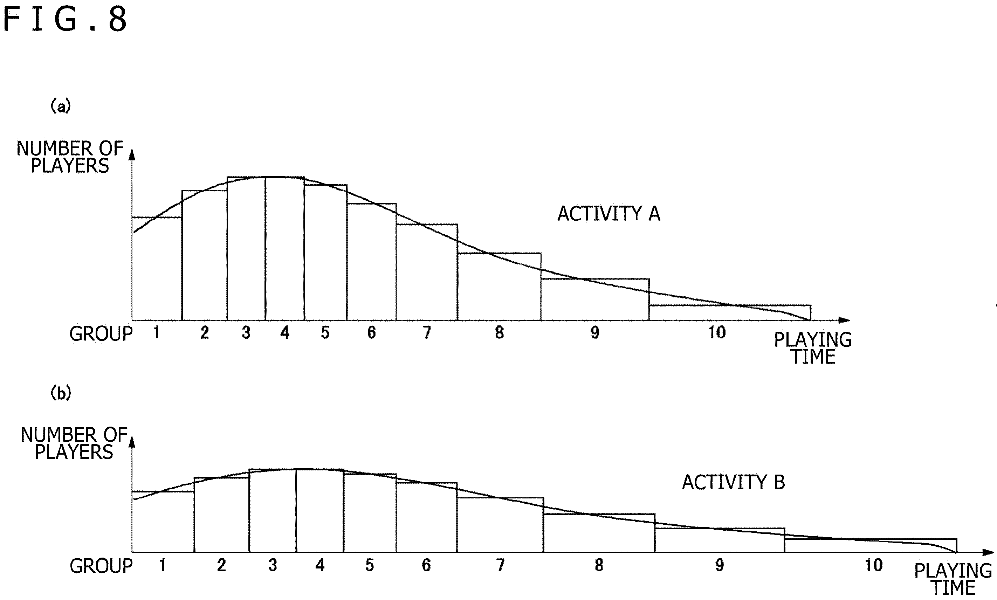

   FIG. 8 depicts graphs each representing distribution of lengths of playing time.
[FIG. 9]

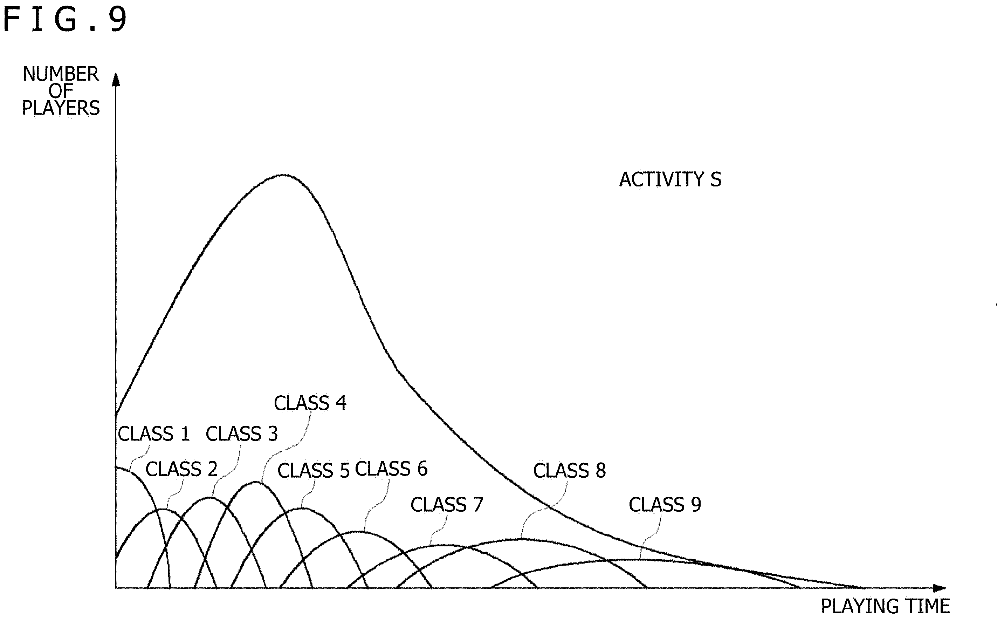

   FIG. 9 is a diagram illustrating a graph obtained by plotting a player for each class.
[FIG. 10]

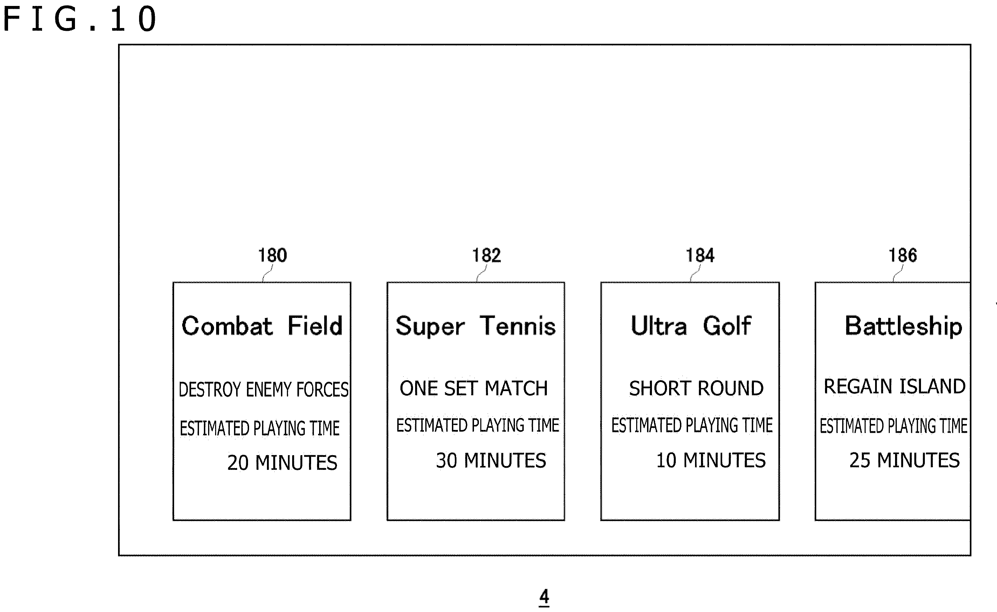

   FIG. 10 is a view illustrating an example of a system screen.
[FIG. 11]

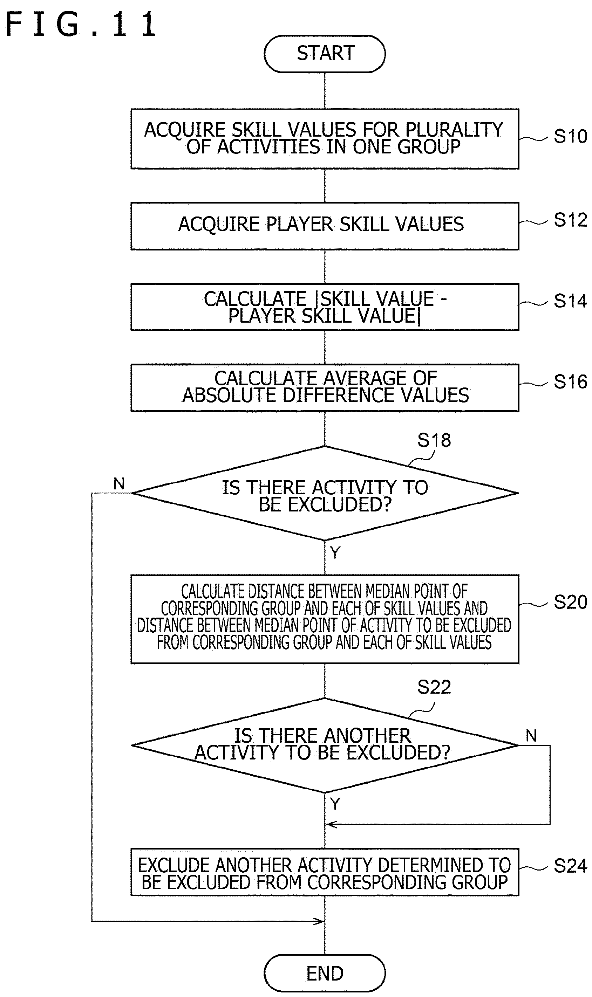

   FIG. 11 is a flowchart indicating clustering processing.
[FIG. 12]

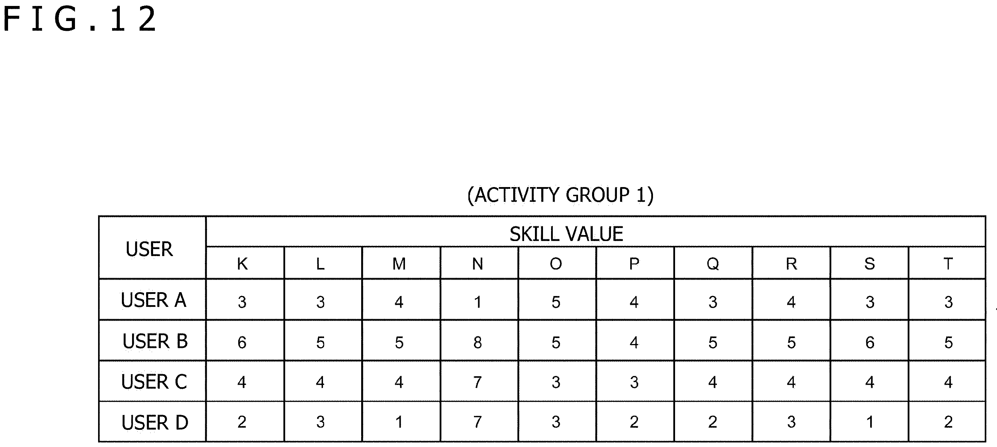

   FIG. 12 is a table indicating an example of derived skill values for a plurality of activities which belong to an activity group 1.
[FIG. 13]

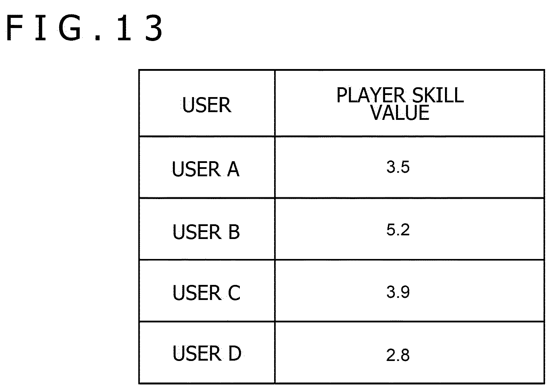

   FIG. 13 is a table indicating an example of derived skill values of a plurality of users.
[FIG. 14]

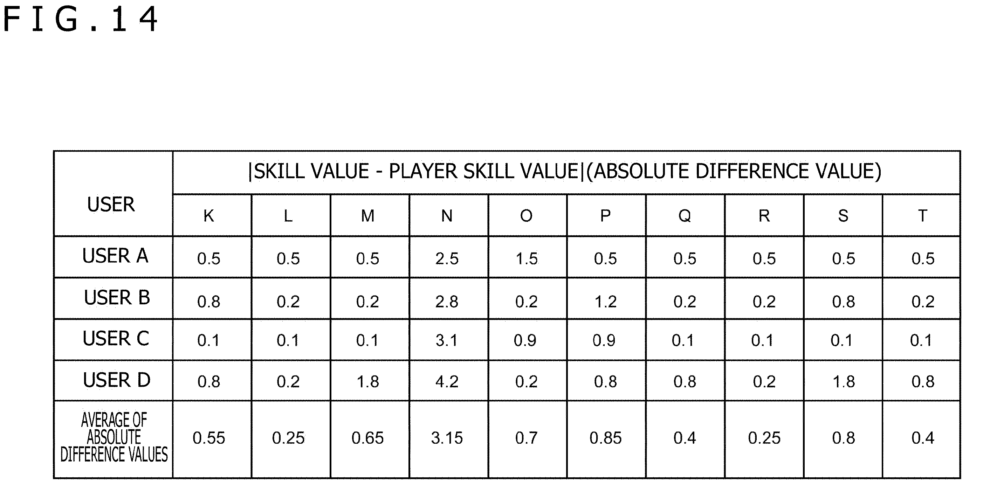

   FIG. 14 is a table indicating an absolute value calculated by subtracting a player skill value from a skill value for each activity.
[FIG. 15]

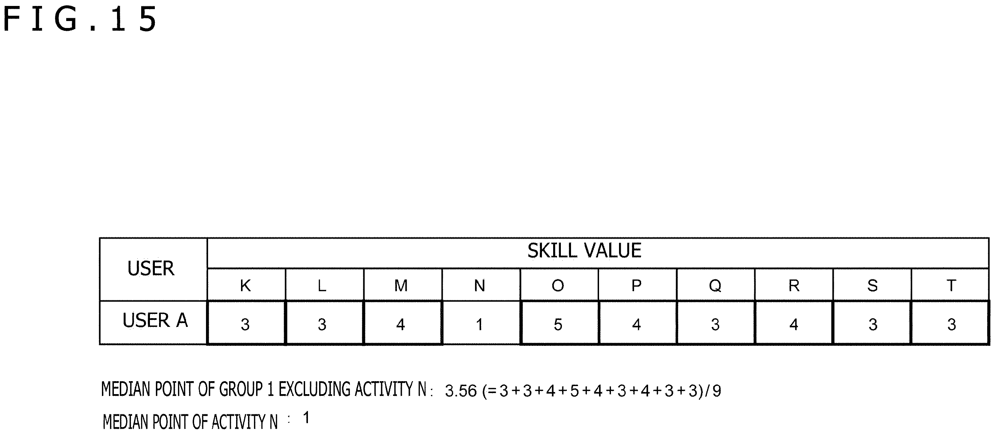

   FIG. 15 is a table used for explaining a method of calculating the median point of the group.
[FIG. 16]

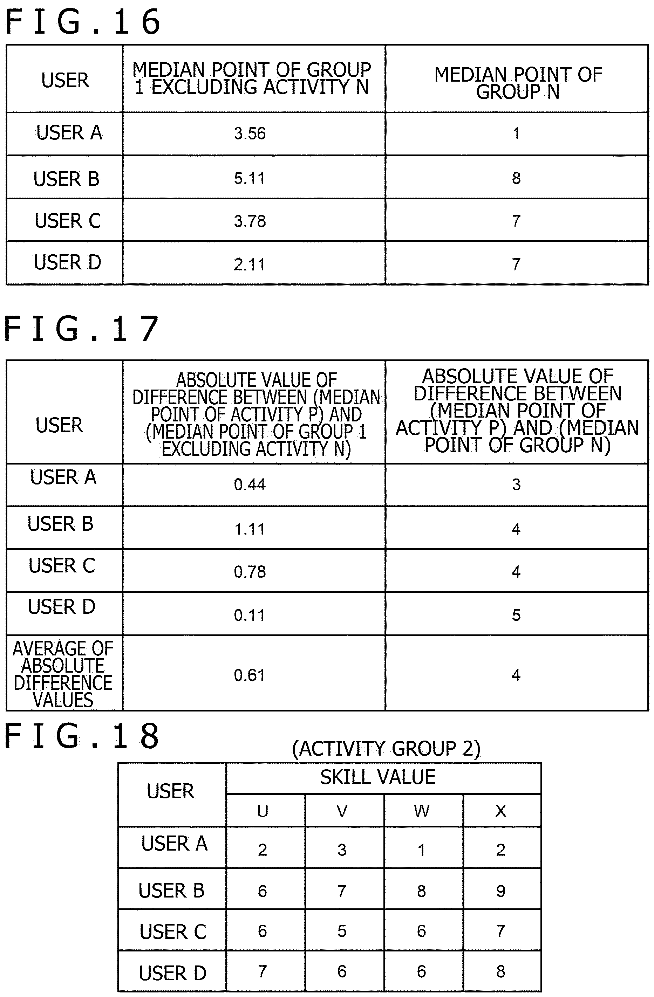

   FIG. 16 is a table indicating the median points of the group 1 and the median points of an activity N.
[FIG. 17]
   FIG. 17 is a table indicating a result of comparing a distance between the median point of the group 1 and the median point of an activity P with a distance of the median point of the activity N and the median point of the activity P.
[FIG. 18]
   FIG. 18 is a table indicating an example of derived skill values for a plurality of activities which belong to an activity group 2.
[FIG. 19]

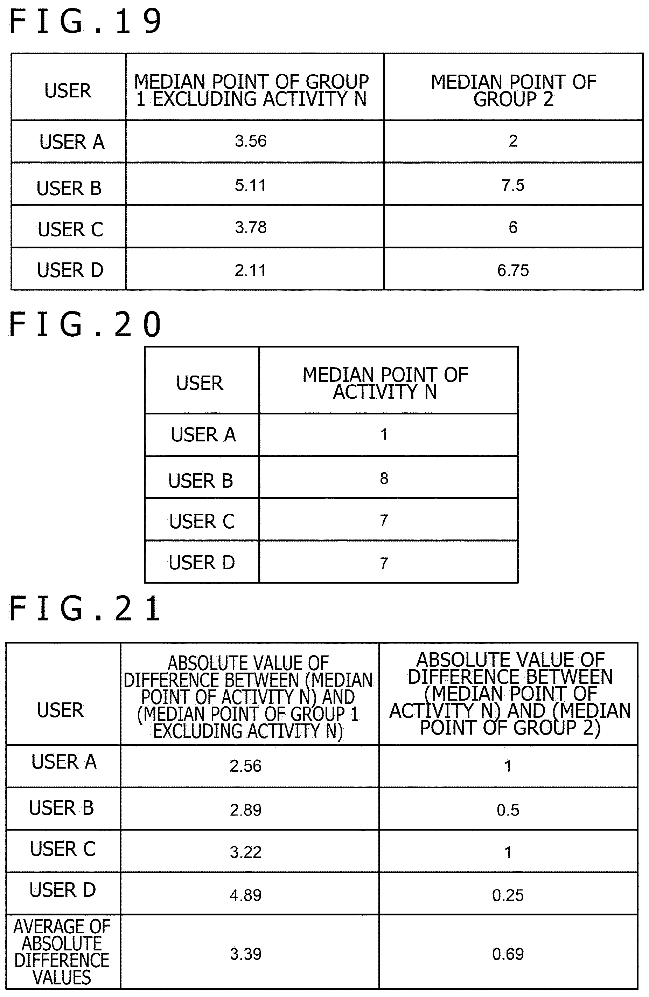

   FIG. 19 is a table indicating the median points of the group 1 and the median points of the group 2, which are calculated for a plurality of users.
[FIG. 20]
   FIG. 20 is a table indicating the median points of the activity N.
[FIG. 21]
   FIG. 21 is a table indicating a result of comparing a distance between the group 1 and the median point of the activity N with a distance between the median point of the group 2 and the median point of the activity N.
[FIG. 22]

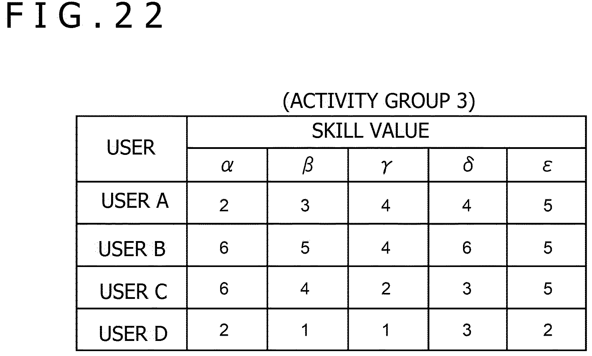

   FIG. 22 is a table indicating an example of derived skill values for a plurality of activities which belong to an activity group 3.
[FIG. 23]

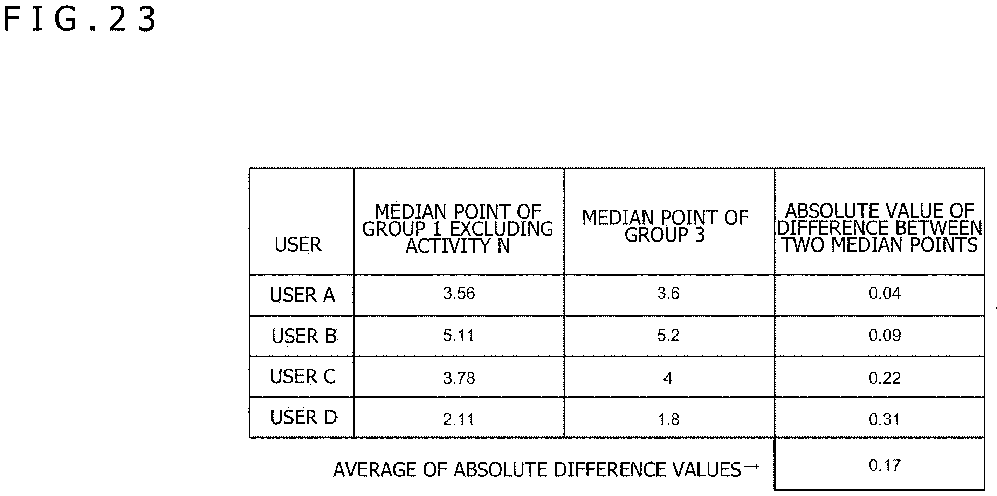

   FIG. 23 is a table indicating the median points of group 1 and the median point of groups 3, which are calculated for a plurality of users.
[FIG. 24]

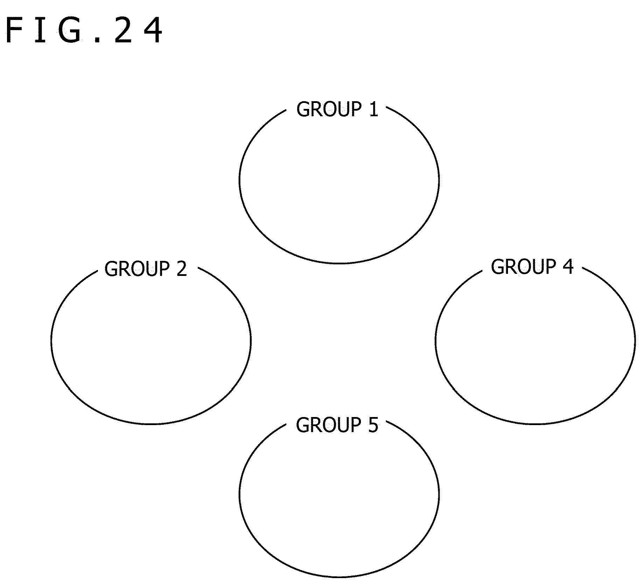

   FIG. 24 is a diagram illustrating groups into which a plurality of activities are classified.

### [Description of Embodiment]

An outline of an embodiment of the present disclosure will be described below. In the embodiment, an information processing device which is a user terminal device executes game software. When an activity is started, the game software outputs, to system software, event information including an activity identifier (activity identification (ID)) used for identifying an activity and information indicating a start of the activity. An activity is one unit of game play and may be a stage, a quest, a mission, or the like that is provided to the user as the game advances. When the activity is ended, the game software outputs, to the system software, event information including the activity ID and information indicating an end of the activity. When the activity is to be ended, the game software may include a result (success or failure) of the activity in the event information. The system software generates event data by adding a game identifier (game ID) for identifying the game and time information (a time stamp) to the event information output from the game software, and transmits the event data to a server device.

The server device collects pieces of event data transmitted from a plurality of information processing devices operated by a plurality of players and analyzes the play trends related to an activity. Particularly in the server device of the present embodiment, in reference to the pieces of event data transmitted from the plurality of information processing devices, the server device may statistically process lengths of playing time of the plurality of players for the activity. The server device has a function of notifying a user who has not yet played the relevant activity of estimated playing time, in reference to the result of statistical processing.

FIG. 1 illustrates an information processing system 1 according to an embodiment of the present disclosure. The information processing system 1 according to the present embodiment is a playing time analyzing system for analyzing playing time for an activity and includes an information processing device 10 operated by a user who is a player and a server device 5. An access point (hereinafter referred to as an "AP") 8 has functions of a wireless access point and a router, and the information processing device 10 connects to the AP 8 in a wireless or wired manner and thereby connects to the server device 5 on a network 3 in a manner allowing communication therebetween. While FIG. 1 illustrates one user and one information processing device 10, the following description is based on a premise that, in the information processing system 1, a plurality of information processing devices 10 operated by a plurality of users and the server device 5 are connected to each other via the network 3.

The information processing device 10 is connected, in a wireless or wired manner, to an input device 6 operated by a user, and the input device 6 outputs information regarding an operation performed by the user to the information processing device 10. Upon receiving operation information from the input device 6, the information processing device 10 reflects the operation information in the processing of system software and game software and causes an output device 4 to output the result of processing. In the information processing system 1, the information processing device 10 is a game device (game console) for executing games, and the input device 6 may be a device that supplies information regarding an operation performed by the user to the information processing device 10 which may be a game controller, for example. Note that the input device 6 may be an input interface such as a keyboard or a mouse.

An auxiliary storage device 2 is a large-capacity recording device such as a hard disk drive (HDD) or a solid state drive (SSD), and may be a built-in recording device or an external recording device that is connected to the information processing device 10 by a universal serial bus (USB) or the like. The output device 4 may be a television set including a display for outputting images and a speaker for outputting sounds. The output device 4 may be connected to the information processing device 10 by a wired cable or may be connected thereto in a wireless manner.

A camera 7 which is an imaging device is provided in the vicinity of the output device 4 and captures an image of a space around the output device 4. While FIG. 1 illustrates an example in which the camera 7 is mounted to an upper part of the output device 4, the camera 7 may be disposed on a side part or a lower part of the output device 4; in any case, the camera 7 is disposed at a position where the camera 7 can capture an image of the user who is positioned in front of the output device 4. The camera 7 may be a stereo camera.

The server device 5 provides a network service to the users of the information processing system 1. The server device 5 manages network accounts for identifying the users, and each user uses the network account to sign in to the network service provided by the server device 5. By signing in to the network service from the information processing device 10, the user can register, in the server device 5, save data regarding a game or a trophy that is a virtual prize obtained during game play. By being registered in the server device 5, the save data and the trophies can be synchronized between devices even in a case where the user uses an information processing device different from the information processing device 10.

The server device 5 according to the present embodiment collects pieces of event data from a plurality of information processing devices 10 operated by a plurality of players. The server device 5 uses the collected pieces of event data to perform statistical processing on the playing time for an activity and evaluates, for each activity, the playing time corresponding to a player skill value that represents the skill (ability) of the user in the game play. Further, the server device 5 derives the player skill value of each user from the collected pieces of event data. The server device 5 can, in reference to the playing time for an activity corresponding to the player skill value and the player skill value of the user, notify the user who has not yet performed the relevant activity of the playing time corresponding to the player skill value of the user, as the estimated playing time. Upon being notified of the estimated playing time, the user can determine whether or not to play the activity according to his/her own situation (for example, the user has to go out in an hour later or other similar situations).

FIG. 2 illustrates a hardware configuration of the information processing device 10. The information processing device 10 includes a main power supply button 20, a power supply ON light emitting diode (LED) 21, a standby LED 22, a system controller 24, a clock 26, a device controller 30, a media drive 32, a USB module 34, a flash memory 36, a wireless communication module 38, a wired communication module 40, a subsystem 50, and a main system 60.

The main system 60 includes a main central processing unit (CPU), a memory which is a main storage device, a memory controller, a graphics processing unit (GPU), and the like. The GPU is mainly used for arithmetic processing of game programs. The main CPU has a function of activating the system software and executing the game programs installed in the auxiliary storage device 2, in an environment provided by the system software. The subsystem 50 includes a sub CPU, a memory which is a main storage device, a memory controller, and the like, but not the GPU.

While the main CPU has a function of executing the game programs installed in the auxiliary storage device 2, the sub CPU has no such function. However, the sub CPU has a function of accessing the auxiliary storage device 2 and a function of exchanging data with the server device 5. The sub CPU has only such limited processing functions, and can thus operate with small power consumption compared to the main CPU. These functions of the sub CPU are executed when the main CPU is in a standby state.

The main power supply button 20 is an input unit used by a user to perform an input operation. The main power supply button 20 is provided on a front surface of a housing of the information processing device 10 and is operated to turn on or off power supply to the main system 60 of the information processing device 10. The power supply ON LED 21 is lit when the main power supply button 20 is turned on, while the standby LED 22 is lit when the main power supply button 20 is turned off. The system controller 24 detects pressing down of the main power supply button 20 by the user.

The clock 26 is a real time clock and generates current date and time information. The clock 26 supplies the information to the system controller 24, the subsystem 50, and the main system 60.

The device controller 30 is configured as a large-scale integrated circuit (LSI) that executes information exchange between devices as a south bridge. As illustrated in FIG. 2, connected to the device controller 30 are such devices as the system controller 24, the media drive 32, the USB module 34, the flash memory 36, the wireless communication module 38, the wired communication module 40, the subsystem 50, and the main system 60. The device controller 30 absorbs the difference in electric property and data transfer speed among the devices and controls the timing of data transfer.

The media drive 32 is a drive device that is driven with a read only memory (ROM) medium 44 mounted thereto, the ROM medium 44 recording application software such as a game and license information, and reads out programs and data from the ROM medium 44. The ROM medium 44 is a read only recording medium as exemplified by an optical disk, a magneto-optical disk, and a Blu-ray disk.

The USB module 34 is a module connected to an external device by a USB cable. The USB module 34 may be connected to the auxiliary storage device 2 and the camera 7 by a USB cable. The flash memory 36 is an auxiliary storage device that configures an internal storage. The wireless communication module 38 is a communication protocol such as a Bluetooth (registered trademark) protocol and an Institute of Electrical and Electronics Engineers (IEEE) 802.11 protocol and wirelessly communicates with the input device 6. The wired communication module 40 performs wired communication with an external device and connects to the network 3 via the AP 8.

FIG. 3 illustrates functional blocks of the information processing device 10. The information processing device 10 includes a processing unit 100 and a communication unit 102. The processing unit 100 includes game software 110, an event information acquiring section 120, an event data transmitting section 122, a game image generating section 130, a display processing section 140, and an activity information acquiring section 150.

The information processing device 10 includes a computer, and various functions illustrated in FIG. 3 are implemented when the computer executes programs. The computer includes, as hardware, a memory to which programs are to be loaded, one or more processors that execute the programs loaded, an auxiliary storage device, other LSIs, and the like. The processor includes a plurality of electronic circuits including semiconductor integrated circuits and LSIs. The plurality of electronic circuits may be mounted onto one chip or may be mounted onto a plurality of chips. The functional blocks illustrated in FIG. 3 are implemented by cooperation between hardware and software. Accordingly, it should be understood by those skilled in the art that these functional blocks can be implemented in various forms including hardware only, software only, or a combination of the two.

The game software 110 includes at least a game program, image data, and sound data. The game program receives information regarding an operation of the input device 6 performed by the user and performs arithmetic operation for moving game characters in a virtual space. The game image generating section 130 includes a GPU for executing such processing as rendering processing and generates image data regarding the game. The display processing section 140 outputs the generated game image from the output device 4. Note that the processing unit 100 includes a game sound generating section that generates game sound data and a sound outputting section that outputs a game sound, but they are omitted from illustration in FIG. 3.

When an activity is started in a game, the game program outputs event information indicating occurrence of a start event of the activity, and, when the activity is ended, the game program outputs event information indicating occurrence of an end event of the activity. The event information acquiring section 120, upon acquiring the event information from the game software 110, generates event data by adding the game ID, and time information (a time stamp) indicating the time of occurrence of an event to the event information, and provides the event data to the event data transmitting section 122. Note that the game program may output event information including the game ID and/or the time stamp to the event information acquiring section 120. The event data transmitting section 122 transmits the generated event data to the server device 5 via the communication unit 102.

Game developers may prepare various kinds of activities in a game. For example, in a case where a battle activity involving an enemy boss is incorporated in a game, the game program outputs event information including the activity ID for identifying the battle activity and information indicating a start of the battle activity, when the battle activity is started. When the player wins in the battle with the enemy boss, the game program outputs event information including the activity ID for identifying the battle activity, information indicating the end of the battle activity, and information indicating the success in the activity.

The event data transmitting section 122 transmits event data concerning the activity performed by the player to the server device 5 via the communication unit 102. In the information processing system 1, the process of transmitting event data is performed by all of the information processing devices 10 connected to the server device 5, and the server device 5 collects pieces of event data concerning various kinds of activities included in various kinds of games from the plurality of information processing devices 10. Preferably, the event information acquiring section 120, upon acquiring the event information from the game software 110, promptly generates event data to which a time stamp is added, and the event data transmitting section 122 transmits the event data to the server device 5.

FIG. 4 illustrates functional blocks of the server device 5 according to the present embodiment. The server device 5 includes a processing unit 200, a communication unit 202, an event data recording section 250, a playing time recording section 252, a playing time distribution recording section 254, a skill value recording section 256, a representative value recording section 258, an activity description recording section 260, and an activity group recording section 262. The processing unit 200 includes an event data acquiring section 210, a playing time acquiring section 212, a skill value deriving section 214, a statistical processing section 220, and an information providing section 240. The statistical processing section 220 includes a distribution generating portion 222, a class sorting portion 224, a representative value determining portion 226, and a classifying portion 228. The information providing section 240 includes a class acquiring portion 242, a playing time extracting portion 244, and a notifying portion 246.

The server device 5 includes a computer, and various functions illustrated in FIG. 4 are implemented when the computer executes programs. The computer includes, as hardware, a memory to which programs are to be loaded, one or more processors that execute the programs loaded, an auxiliary storage device, other LSIs, and the like. The processor includes a plurality of electronic circuits including semiconductor integrated circuits and LSIs. The plurality of electronic circuits may be mounted onto one chip or may be mounted onto a plurality of chips. The functional blocks illustrated in FIG. 4 are implemented by cooperation between hardware and software. Accordingly, it should be understood by those skilled in the art that these functional blocks can be implemented in various forms including hardware only, software only, or a combination of the two.

The event data acquiring section 210 acquires, from the plurality of information processing devices 10, pieces of event data concerning an activity performed by a plurality of players and records the pieces of event data in the event data recording section 250. The event data recording section 250 records the pieces of event data for each game title in association with the player's network account. As described above, the event data includes at least the game ID, the activity ID, information indicating the start or end of the activity, and a time stamp. In the following description, the procedure of analyzing the collected pieces of event data by the server device 5 will be described.

FIG. 5 illustrates a procedure for analyzing the collected pieces of event data. Analyzing the pieces of event data includes a playing time calculating process (S10) to be performed by the playing time acquiring section 212, a skill value deriving process (S12) to be performed by the skill value deriving section 214, and a representative value determining process (S14) to be performed by the representative value determining portion 226.

### <S10: Playing time calculating process>

The playing time acquiring section 212 acquires the playing time for an activity. The playing time acquiring section 212 acquires the lengths of playing time of a plurality of players for the activity from the pieces of event data including activity start event information (start event data) and event data including activity end event information (end event data) that are recorded in the event data recording section 250. Playing time for an activity is calculated in reference to the time stamp included in the start event data and the time stamp included in the end event data.

FIG. 6 is a diagram used for describing the method for calculating the playing time. FIG. 6 illustrates a start event and an end event of an activity A performed by one player. Specifically, "Start A" indicates the start event of the activity A, while "End A" indicates the end event of the activity A. The start event data includes a start time t1 of the activity A, while the end event data includes an end time t2 of the activity A. The playing time acquiring section 212 calculates the playing time of the player for the activity A to be (t2 - t1). The playing time acquiring section 212 records, together with the game ID and the activity ID, the calculated playing time for the activity in the playing time recording section 252 in association with the player's network account. The playing time acquiring section 212 analyzes the pieces of event data of the plurality of players, acquires the playing time for each of the plurality of activities for each player, and records the lengths of playing time in the playing time recording section 252.

### <S12: Skill value deriving process>

In the statistical processing section 220, the distribution generating portion 222 generates the distribution of playing time for each activity, in reference to the plurality of lengths of playing time acquired by the playing time acquiring section 212. The distribution generating portion 222 records the distribution of playing time generated for each activity in the playing time distribution recording section 254.

FIG. 7(a) and FIG. 7(b) each illustrate a distribution curve representing the relation between the playing time for one activity and the number of players who have performed the activity. The axis of abscissa indicates the playing time, while the axis of ordinate indicates the number of players. FIG. 7(a) illustrates the relation between the playing time for the activity A and the number of players thereof, while FIG. 7(b) illustrates the relation between the playing time for the activity B and the number of players thereof.

The server device 5 implements a technique of deriving a skill value obtained by assessing the skill of a user and notifying the user of the playing time corresponding to the derived skill value, based on such a knowledge that there is a correspondence between the playing time for an activity and the user's skill (ability) in playing games. Based on this knowledge, users with high game skill complete an activity in a relatively short length of playing time, while users with low game skill complete the activity in a relatively long length of playing time. Hence, it is predicted that, if the user has high game skill, both the activity A and the activity B are completed in short playing time, but if the user has low game skill, both the activity A and the activity B are completed in long playing time.

FIGS. 8(a) and 8(b) each illustrate distribution of playing time. The distribution generating portion 222 lists, for each activity, all the players in terms of playing time in ascending order and classifies all the players into a plurality of groups in such a manner that each group includes the same number of players. In the present embodiment, the distribution generating portion 222 classifies all the players into a total of ten groups, i.e., the group 1 to the group 10, each group including the same number of players. In a case where the number of players who have played the activity A is one million, each group includes 100 thousand players, with the group 1 being a group in which players with the shortest playing time are gathered and the group 10 being a group in which players with the longest playing time are gathered. The distribution generating portion 222 records the distribution of playing time generated for each activity in the playing time distribution recording section 254. For example, the playing time distribution recording section 254 may record, as the distribution of playing time, the group numbers ranging from 1 to 10, in association with the shortest length of playing time and the longest length of playing time included in each group.

The skill value deriving section 214 derives the skill value of a user for the relevant activity, in reference to the playing time of the user for the activity and distribution of playing time for the relevant activity. The skill value deriving section 214 refers to the distribution of playing time recorded in the playing time distribution recording section 254 and specifies the group number of the group in which the playing time of the user would be included, to thereby derive the skill value of the user for the activity. In the present embodiment, the group number per se may represent the skill value. Accordingly, the skill value deriving section 214 derives, when the playing time of the user who has performed the activity A is included in the group with the group number 3, number "3" as the skill value of the user for the activity A, and, when the playing time of the user who has performed the activity B is included in the group with the group number 5, number "5" as the skill value of the user for the activity B. In the present embodiment, the skill value 1 indicates the highest skill level, while the skill value 10 indicates the lowest skill level. The skill value deriving section 214 records the skill values derived for all the activities played by the user, in association with the network account of the user (player), in the skill value recording section 256.

The skill value deriving section 214 derives the skill value of the user concerning the game play, in reference to the plurality of skill values derived for a plurality of activities. Specifically, the skill value deriving section 214 derives the skill values of the user for the plurality of activities which have most recently been played by the user, averages the plurality of derived skill values, and derives the skill value of the user concerning the game play. In the present embodiment, the skill value deriving section 214 averages 10 skill values derived for the most recently played 10 activities and derives the skill value of the user concerning the game play. In the following description, the skill value of the user concerning the game play is sometimes referred to as a "player skill value."

The following description illustrates a specific example in which the player skill value of a user X is derived. It is to be noted that the numerical values illustrated in the specific example may include numerical values that deviate from the knowledge described above but they are mere examples for describing the present embodiment.

The group numbers of the groups that include the lengths of playing time for the 10 activities which have most recently been played by the user X are as follows.
Activity A: group number 3
Activity B: group number 5
Activity C: group number 1
Activity D: group number 2
Activity E: group number 4
Activity F: group number 7
Activity G: group number 5
Activity H: group number 5
Activity I: group number 8
Activity J: group number 10

Since the skill values are represented by the group numbers, the skill values of the user for the activities are derived as follows.
Activity A: skill value 3
Activity B: skill value 5
Activity C: skill value 1
Activity D: skill value 2
Activity E: skill value 4
Activity F: skill value 7
Activity G: skill value 5
Activity H: skill value 5
Activity I: skill value 8
Activity J: skill value 10

The skill value deriving section 214 averages the skill values derived for the 10 activities and derives the player skill value of the user X.

(Player skill value) = (3 + 5 + 1 + 2 + 4 + 7 + 5 + 5 + 8 + 10)/10 = 5 In the manner described above, with the skill values derived for the most recently played 10 activities averaged, the player skill value of the user X is derived to be "5."

The skill value deriving section 214 derives the player skill values of all users and records the player skill values in the skill value recording section 256. The player skill value takes a value within the range of 1 to 10, with 1 as the minimum value and 10 as the maximum value. It can thus be said that users with smaller player skill values have higher game skill while users with larger player skill values have lower game skill.

As described above, the skill value deriving section 214 derives the player skill value in reference to the skill values derived for a predetermined number of activities that have been most recently played. The skill value deriving section 214 may update the player skill value of the user every time the user performs an activity, but may alternatively update the player skill value periodically, for example, once a day.

### <S14: Representative value determining process>

In the statistical processing section 220, the class sorting portion 224 sets a plurality of classes and sorts the player into any one of the plurality of classes according to the player skill value of the player. In the present embodiment, the class sorting portion 224 sets 9 classes and performs the sorting process of the users in accordance with the following rules. PS represents the player skill value.
1 ≤ PS ≤ 2: class 1
2 < PS ≤ 3: class 2
3 < PS ≤ 4: class 3
4 < PS ≤ 5: class 4
5 < PS ≤ 6: class 5
6 < PS ≤ 7: class 6
7 < PS ≤ 8: class 7
8 < PS ≤ 9: class 8
9 < PS ≤ 10: class 9

The user X having the player skill value "5" is sorted into the class 4 by the class sorting portion 224. The class sorting portion 224 sorts all the users participating in the information processing system 1 into any one of the classes 1 to 9 according to their player skill values, and records the classes of the users in the skill value recording section 256.

FIG. 9 illustrates a graph in which the players are plotted for each class in a distribution curve indicating the relation between the playing time for an activity S and the number of players thereof. The graph of the class 1 indicates the relation between the lengths of playing time of the plurality of players belonging to the class 1 and the number of players thereof, while the graph of the class 2 indicates the relation between the lengths of playing time of a plurality of players belonging to the class 2 and the number of players thereof. That is, the graph of the class N (which is an integer of 1 to 9) represents the relation between the lengths of playing time of the plurality of players belonging to the class N and the number of players. Accordingly, adding up the graphs of all the classes 1 to 9 produces a distribution curve indicating the relation between the lengths of playing time of all users for the activity S and the number of players thereof. Note that the number of players belonging to each class may be different between the classes.

The representative value determining portion 226 determines, for each activity, a representative value of the playing time in each class, in reference to the lengths of playing time of the plurality of players in each class. The representative value determining portion 226 may derive, as the representative value of each class, a median value of the plurality of lengths of playing time in each class. The representative value determining portion 226 determines the representative value (medN) of the playing time in each class as follows.
Class 1: med1
Class 2: med2
Class 3: med3
Class 4: med4
Class 5: med5
Class 6: med6
Class 7: med7
Class 8: med8
Class 9: med9

The representative value of the playing time determined for each class may be provided to the user who has not yet performed the activity, as the estimated playing time. In a case where the user X who belongs to the class 4 has not yet performed the activity S, the server device 5 may notify the user X that the estimated playing time of the user X for the activity S is "med4."

The representative value determining portion 226 determines the representative value for each of the classes 1 to 9 for all of the activities, and records the representative values in association with the classes in the representative value recording section 258. In the present embodiment, the representative value is a median value, but may alternatively be an average value or a mode value. The representative value determining portion 226 may perform the representative value determining process periodically, for example, once a day. This completes the description regarding the analysis process for the event data in the present embodiment.

The information providing section 240 may notify the user who is operating the information processing device 10 of the estimated playing time for the activity which the user has not yet performed. Specifically, the information providing section 240 notifies the user of the representative value of the playing time associated with the class of the user or the length of time based on the representative value, as the estimated playing time. The information providing section 240 may notify the user of the estimated playing time at any desired timing.

The class acquiring portion 242 acquires, from the skill value recording section 256, the class to which the user operating the information processing device 10 belongs. For example, when the user X logs in to the information processing device 10, the class acquiring portion 242 may acquire the class to which the user X who has logged in belongs from the skill value recording section 256. The playing time extracting portion 244 extracts, for the activity which the user X can perform, the representative value of the playing time associated with the class of the user X from the representative value recording section 258. The notifying portion 246 notifies the information processing device 10 of the user X of information concerning the estimated playing time based on the extracted representative value of the playing time. Note that the estimated playing time based on the representative value of the playing time may be the representative value of the playing time per se, but may alternatively be a length of time obtained by slight adjustment to the representative value of the playing time. For example, in a case where the representative value of the playing time is 4.9 minutes, the notifying portion 246 may use a round number (for example, 5 minutes) as the estimated playing time. The notifying portion 246 may notify the information processing device 10 of the user X of information concerning the estimated lengths of playing time for a plurality of activities.

In the information processing device 10, the activity information acquiring section 150 acquires, from the server device 5, information concerning the estimated playing time for an activity. The display processing section 140 displays the information acquired by the activity information acquiring section 150.

FIG. 10 illustrates an example of a system screen displayed on the output device 4. The display processing section 140 generates system images 180, 182, 184, and 186 from the information acquired by the activity information acquiring section 150, and displays the system images on the output device 4. The four system images 180, 182, 184, and 186 each display the estimated playing time for an activity in a different game title. This allows the user X to use the estimated playing time for each activity to determine which game to play.

The system images 180, 182, 184, and 186 that are displayed in a card format may be a graphical user interface (GUI). For example, when the user X selects any one of the system images, the game corresponding to the system image may automatically be activated.

In the embodiment described above, on an assumption that a user with high game skill completes an activity in a relatively short length of playing time while a user with low game skill completes the activity in a relatively long length of playing time, the skill value deriving section 214 averages the derived skill values of the user for a predetermined number of activities which have most recently been played by the user, thereby deriving the player skill value. This player skill value represents the skill of the user concerning the game play which has been most recently played by the user.

Yet, activities having various features are prepared in a game. Even in one game title, for example, various activities such as taking down an enemy character, finding a hidden item, reaching a goal without falling, and doing a puzzle, are present, and the skills required for users are different among the activities. As such, in a case in which a user X who is good at a battle quest and bad at a hidden object quest has most recently played 10 battle activities continuously, the skill value deriving section 214 derives a player skill value indicating high skill, and accordingly, the user X is sorted into a class with a high level.

When presenting, to the user X, an estimated playing time for an activity that has not yet been played by the user X, the playing time extracting portion 244 extracts, for the relevant activity, a representative value of the playing time associated with the class to which the user X belongs, from the representative value recording section 258. Since the user X is sorted into the class with high level, the playing time extracting portion 244 extracts, for the relevant activity, the representative value of the playing time intended for the player with high level. At this time, there is no problem if the relevant activity is a battle type; however, if the relevant activity is a hidden object type, even though the user X is not good at the hidden object quest, the playing time extracting portion 244 extracts the representative value of the playing time intended for the player with high skill. Hence, the estimated playing time that is too short for the user X is presented, and consequently, the user X cannot complete the hidden object activity in the estimated length of playing time presented.

Meanwhile, the statistical processing section 220 of the embodiment has a function of classifying a plurality of activities into groups according to play tendencies of a plurality of players. The skill value deriving section 214 derives a player skill value for each group of an activity, and the class sorting portion 224 sets a class of each user for each activity group, in reference to a player skill value derived for each activity group. Accordingly, when an estimated playing time for an activity that has not yet been played by the user X is to be presented to the user X, the playing time extracting portion 244 specifies an activity group to which the relevant activity belongs, and specifies the class of the user that is set to the specified activity group, thereby making it possible to extract the representative value of the appropriate playing time that matches with the skill of the user.

In the statistical processing section 220, the classifying portion 228 has a function of classifying a plurality of activities into groups. The classifying portion 228 of the embodiment includes a function of clustering a plurality of activities with use of natural language and a function of clustering a plurality of activities with use of skill values derived by the skill value deriving section 214. In the following description, two types of clustering functions will be described.

### <Clustering Function Based on Natural Language>

The activity description recording section 260 records an explanation (description) regarding an activity which has been created by the game developers. The explanation of the activity represents the contents of the activity with natural language, and is, in general, prepared for a purpose of presenting to the user. As such, the explanations are created as text messages for recognizing the contents of the activity by the user, such as "defeat Boss P," "do the puzzle and accomplish the stage," or "defeat 10 enemy characters."

The classifying portion 228 includes a function of classifying the explanations prepared for the plurality of activities into groups, through natural language processing. For example, in a case in which the explanation is in Japanese, the classifying portion 228 may perform a morphological analysis to divide the explanation in word unit, count the number of appearances of a word, and generate a vector whose length is the number of words. The classifying portion 228 vectorizes all the explanations, and evaluates the degree of similarity between sentences, thereby classifying them into groups. The classifying portion 228 may vectorize explanations regarding activities by use of Sentence2vec, for example. In addition, various techniques of evaluating the degree of similarity of sentences are proposed, and the classifying portion 228 may use, as a clustering method, the K-means method.

In the following description, the explanations regarding the activities A to J are indicated.
Activity A: "defeat Boss A"
Activity B: "defeat Boss B"
Activity C: "defeat Boss C"
Activity D: "do puzzle D"
Activity E: "defeat Boss E"
Activity F: "defeat 10 characters F"
Activity G: "defeat five characters G"
Activity H: "do puzzle H"
Activity I: "defeat 15 characters I"
Activity J: "do puzzle J"

Regarding the activities A to J, the classifying portion 228 performs natural language processing, and may sort the activities A to C, E to G, and I and the activities D, H, and J into different groups. Specifically, the classifying portion 228 sorts the seven activities A to C, E to G, and I into the first group, while sorting the three activities D, H, and J into the second group. The classification into groups described above is merely an example, and the classifying portion 228 may sort, through the natural language processing, the plurality of activities into three or more groups.

In a case in which a game is multilingual, the classifying portion 228 may use activity explanations in a plurality of languages to classify the plurality of activities into groups. In a case in which the game developers create activity explanations in two or more languages, the classifying portion 228 performs the natural language processing on the activity explanations in respective languages to classify them into groups, and the results of the classification derived from the activity explanations in the respective languages are subjected to statistical processing, thereby improving the accuracy of the classification of the plurality of activities into groups.

Note that the game developers may generate an activity ID in terms of natural language. For example, the activity ID of the activity A may be generated as "Defeat A boss." In a case in which there is an activity not having any explanation prepared, the classifying portion 228 may extract natural language that matches with the activity explanation according to the activity ID, and use the extracted result for the clustering processing. The classifying portion 228 records the classification result of the plurality of activities into groups in the activity group recording section 262. The activity group recording section 262 records activity IDs of activities that belong to respective groups in association with pieces of information for specifying the respective groups (group numbers).

### <Clustering Function Based on Skill Value>

In addition to the clustering function based on natural language, the classifying portion 228 includes a function of classifying a plurality of activities into groups, with use of skill values of a plurality of users derived by the skill value deriving section 214. In the following description, as one of representative functions of classification processing, processing of finding an activity that is excluded from a plurality of activities constituting one group will be described.

FIG. 11 is a flowchart indicating clustering processing based on the skill value. The classifying portion 228 acquires, for a plurality of activities which belong to one group, skill values of a plurality of users that are derived from the skill value recording section 256 (S10). The classifying portion 228 may randomly select a predetermined sampling number of users (for example, 1000), and acquire the skill values for the selected predetermined number of users.

Note that, in the initial state before the clustering processing is performed, all the activities included in the game are not classified into groups. Hence, in a case in which the classifying portion 228 first performs the clustering processing based on the skill value, the classifying portion 228 may acquire, for all the activities, the derived skill values of a plurality of users.

Note that, in a case in which the clustering processing based on natural language has already been performed and the plurality of activities are classified into groups, the classifying portion 228 acquires, for a plurality of activities which have been classified into and belong to one group, the derived skill values of the plurality of users. In this case, the classifying portion 228 uses the clustering function based on natural language for a first phase of classification, while using the clustering function based on the skill value as a second phase of classification which increases the accuracy of each activity group which is classified at the first phase.

FIG. 12 indicates an example of derived skill values for a plurality of activities which belong to an activity group 1. In this example, the activity group 1 includes 10 activities K to T, and the activity group recording section 262 records an activity ID of each of the activities K to T, in association with the activity group 1. The classifying portion 228 specifies the activities K to T included in the activity group 1, with reference to the activity group recording section 262, and reads the derived skill values of the users A to D for the activities K to T, from the skill value recording section 256. As described above, in the initial state in which classification has not yet been performed, the activity group 1 includes all the activities included in the game. In the actual clustering processing, it is preferred that the classifying portion 228 perform the clustering processing based on the skill value, with use of the skill values of several hundreds of users.

FIG. 13 indicates an example of derived player skill values of a plurality of users. The classifying portion 228 acquires player skill values which are derived for the users A to D from the skill value recording section 256 (S12). The player skill value is an average value of skill values for a predetermined number of activities which have most recently been played, and signifies an index representing the latest skill of a user. Is to be noted that, in the above description, the player skill value is derived as an average of the skill values for the 10 activities that have been most recently played; however, it is not limited to 10, and is used/regarded as the averaged skill value obtained by averaging the skill values for the predetermined number of activities that have been most recently played. The classifying portion 228 calculates a difference (deviation) obtained by subtracting each of the player skill values of the plurality of users from each of the skill values of the plurality of users derived for each activity, to derive an absolute value of the difference (S14).

FIG. 14 indicates an absolute value calculated by subtracting a player skill value from a skill value for each activity. The skill value for each activity represents the skill (ability) of a user for each activity, while the player skill value represents an average skill of each user for the predetermined number of activities which have most recently been played. Hence, when the absolute value calculated by subtracting a player skill value from a skill value for one activity is large, it signifies either a case in which the user has played the relevant activity much better than other activities in the group, or a case in which the user has played the relevant activity much worse than other activities in the group. This can be a factor to estimate that a property or a characteristic of the relevant activity is different from that of the remaining activities.

The classifying portion 228 calculates the average of the plurality of absolute values for each of the activities (also simply referred to as an "error average value" below) (S16). On the lowermost stage of the table indicated in FIG. 14, the error average values calculated for each activity are indicated. The classifying portion 228 performs processing of specifying an activity which is to be excluded from the group, in reference to the error average value (S18). When there is not an activity to be excluded from the group (N in step S18), the classifying portion 228 ends the clustering processing for the relevant group and then performs the clustering processing for another group.

In step S18, the classifying portion 228 specifies an activity having a relatively great error average value among the plurality of activities which belong to the activity group 1, as a candidate to be excluded from the activity group 1. More specifically, the classifying portion 228 specifies an activity having the greatest error average value as a candidate to be excluded. With reference to the lowermost stage of the table indicated in FIG. 14, the activity whose error average value is greatest is an activity N. The classifying portion 228 compares the error average value of the activity N with a predetermined threshold, and when the error average value is equal to or less than the predetermined value, it is determined that the activity N belongs to the group 1. The predetermined threshold may be 2.0, for example. In this case, since the error average value of the activity N is 3.15, the classifying portion 228 determines that the activity N is an activity to be excluded from this group 1 (Y in step S18).

Subsequently, the classifying portion 228 checks whether or not there is an activity, other than the activity N, to be excluded from this group. In order to check the presence of an activity, other than the activity N, to be excluded from this group, the classifying portion 228 calculates, for each user, the median point (the average of the skill values) of the group 1 from which the activity N is excluded.

FIG. 15 is a table used for explaining a method of calculating the median point of the group 1 for the user A. The classifying portion 228 calculates the average of the skill values for nine activities other than the activity N, as the median point of the group 1. In this example, the median point of the group 1 other than the activity N is calculated as 3.56. Meanwhile, the median point of the activity N is the skill value itself, that is, 1.

FIG. 16 indicates the median points of the group 1 and the median points of the activity N which are calculated for the plurality of users. The classifying portion 228 calculates, for each of the plurality of users, the average of the skill values for the nine activities other than the activity N, as the median point of the group 1.

Then, the classifying portion 228 calculates a distance between the median point of the group 1 and each of the skill values of the nine activities K to M and O to T and a distance between the median point of the activity N (S20) and each of the skill values of the nine activities K to M and O to T, and studies whether the median point of each activity is close to which median point (S22). In this case, when the median point of the activity to be studied is close to the median point of the group 1, the relevant activity has a property close to the group 1, while, when the median point of the activity to be studied is close to the median point of the activity to be excluded (activity N), the activity to be studied has a property closer to the group to which the activity N belongs rather than the group 1 (at this point, the group to which only the activity N belongs).

In the following description, the classifying portion 228 indicates a result of studying the median point of the activity P having the greatest absolute difference value, among the nine activities. FIG. 17 indicates a result of comparing the distance between the median point of the group 1 and the median point of the activity P with the distance between the median point of the activity N and the median point of the activity P. The classifying portion 228 calculates, for each user, an absolute value of the difference between (the median point of the activity P) and (the median point of the group 1 excluding the activity N), and an absolute value of the difference between (the median point of the activity P) and (the median point of the activity N), to thereby calculate the average of the absolute difference values for each case. On the lowermost stage of the table indicated in FIG. 17, there is indicated the average of the distances between the median point of the activity P and the median point of the group 1 and the average of the distance between the median point of the activity P and the median point of the activity N.

From the result of this study, it is found that the median point of the activity P is closer to the median point of the group 1 than the median point of the activity N. Accordingly, the classifying portion 228 determines that the activity P belongs to the group 1. The classifying portion 228 determines whether or not there is an activity which is closer to the activity N rather than the group 1 by performing this study for all the nine activities (S22). In a case in which there is an activity which is closer to the activity N rather than the group 1 (Y in step S22), the classifying portion 228 determines that the relevant activity is to be excluded from the group 1, and excludes the relevant activity with the activity N, from the group 1 (S24). In contrast, in a case in which there is not an activity which is closer to the activity N rather than the group 1 (N in step S22), the classifying portion 228 determines that the activity N only is an object to be excluded, and excludes the activity N from the group 1 (S24). In this manner, the classifying portion 228 specifies an activity which does not belong to the group 1, and accordingly, it is possible to set the group 1 as an aggregate of the similar activities which they are similar in play tendency of individual users (length of playing time).

After determining that the activity N is to be excluded from the group 1, the classifying portion 228 searches for a group to which the activity N newly belongs.

FIG. 18 indicates an example of skill values which are derived for a plurality of activities belonging to the activity group 2. In this example, the activity group 2 includes four activities U to X, and the activity group recording section 262 records the activity IDs for the activities U to X in association with the activity group 2. The classifying portion 228 specifies the activities U to X included in the activity group 2 with reference to the activity group recording section 262, and reads the derived skill values of the users A to D for the activities U to X, from the skill value recording section 256.

FIG. 19 indicates the median points of the group 1 and the median points of the group 2, which are calculated for the plurality of users. The classifying portion 228 calculates the average of the skill values of each of the plurality of users A to D for the activity group 1 excluding the activity N, as the median point of the group 1. The median points of this group 1 are the same as those indicated in FIG. 16. In addition, the classifying portion 228 calculates the average of the skill values of each of the plurality of users A to D for the activity group 2, as the median point of the group 2.

FIG. 20 indicates the median points of the activity N. The classifying portion 228 studies whether the median point of the activity N is closer to which of the median point of the group 1 or the median point of the group 2.

FIG. 21 indicates a result of comparing a distance between the median point of the group 1 and the median point of the activity N with a distance between the median point of the group 2 and the median point of the activity N. The classifying portion 228 calculates, for each user, the absolute value of the difference between (the median point of the activity N) and (the median point of the group 1 excluding the activity N), and the absolute value of the difference between (the median point of the activity N) and (the median point of the group 2), to calculate the average of the absolute difference values for each case. On the lowermost stage of the table indicated in FIG. 21, there is indicated the average of the distances between the median point of the activity N and the median point of the group 1, and the average of the distances between the median point of the activity N and the median point of the group 2.

From the result of this study, it is found that the median point of the activity N is positioned closer to the median point of the group 2 than the median point of the group 1. At this time, the classifying portion 228 determines that the activity N belongs to the group 2 on such a condition that the average of the absolute difference values (distances) between (the median point of the activity N) and (the median point of the group 2) is equal to or less than a predetermined threshold (for example, 1.5). As the result of this determination, the group 2 has the activity N added thereto.

The classifying portion 228 also studies the other groups, in a case in which the average of the absolute difference values is greater than the predetermined threshold. As a result of performing study on all the groups, if a group of which the average of the absolute difference values is equal to or less than the predetermined threshold is not present, the classifying portion 228 is allowed to create a new group including the activity N. The classifying portion 228 records the result of classification into groups in the activity group recording section 262.

At a point of time at which the classifying portion 228 performs classification into groups, the distances between the groups are a predetermined value or more. However, it is assumed that, as pieces of event data are accumulated, the distances between the groups may vary. FIG. 22 indicates an example of the skill values for a plurality of activities belonging to the activity group 3. In this example, the activity group 3 includes five activities α to ε, and the activity group recording section 262 records the activity IDs of the activities α to ε, in association with the activity group 3. The classifying portion 228 specifies the activities a to ε including the activity group 3, with reference to the activity group recording section 262, and for the activities a to ε, the derived skill values of the users A to D are read from the skill value recording section 256.

FIG. 23 indicates the median points of the group 1 and the median points of the group 3, which are calculated for the plurality of users. The classifying portion 228 calculates, for each of the plurality of users A to D, the average of the skill values of the activity group 1 excluding the activity N, as the median point of the group 1. Moreover, the classifying portion 228 calculates, for each of the plurality of users A to D, the average of the skill values of the activity group 3, as the median point of the group 3.

The classifying portion 228 calculates, for each user, the absolute difference values (distances) between the median point of the group 1 and the median point of the group 3, to obtain the average of the absolute difference values. The average of these absolute difference values represents how close these two groups are to each other. The classifying portion 228 may merge the two groups, under a condition that the average of the absolute difference values is equal to or less than the predetermined threshold (for example, 0.5). For example, the classifying portion 228 eliminates the group 3 and makes the activities α to ε which have belonged to the group 3 belong to the group 1. Note that the classifying portion 228 may eliminate the group 1 and make the activities K to M and O to T which have belonged to the group 1 belong to the group 3. The classifying portion 228 records the latest state obtained after the classification into groups is performed in the activity group recording section 262.

The classifying portion 228 periodically performs the clustering processing based on the skill values, so that a plurality of activities can be classified into groups with high accuracy. The classifying portion 228 first performs classification into the groups with use of the clustering processing based on natural language, and uses the clustering function based on the skill value in order to enhance the accuracy of the activity groups generated by the clustering function based on natural language, thereby making it possible to generate a plurality of activity groups promptly and highly accurately.

FIG. 24 is a diagram illustrating groups into which a plurality of activities are classified. In this example, a plurality of activities are classified into four groups by the classifying portion 228. (Since the group 3 is made to be included in the group 1, it is eliminated here). The grouping processing performed by the classifying portion 228 reflects the play tendencies (lengths of playing time) of the individual users, and accordingly, such a situation in which many battle activities are included in the group 1 and many hidden object activities are included in the group 2 is established, for example.

In the embodiment, the skill value deriving section 214 derives, for each activity group, the player skill values, and the class sorting portion 224 sets the class for each user for each activity group, in reference to the player skill values derived for each activity group. Thus, upon presenting an estimated length of playing time for the activity which has not yet been played by the user X, the playing time extracting portion 244 specifies the activity group belonging to the relevant activity, and specifies the class of the user which is set for the specified activity group, thereby making it possible to extract the representative value of the playing time that is suitable for the skill of the user.

The present disclosure is described above, based on an embodiment. A person skilled in the art would understand that this embodiment is an example, various variations are possible in combinations of respective components or processing processes in the embodiment, and such variations fall within the scope of the present disclosure. In the embodiment, an example in which, in one game title, a plurality of activities are subjected to clustering processing is provided, and it is also possible to perform clustering processing on a plurality of activities across a plurality of game titles.

The present disclosure may include the following aspects.

### [Item 1]

A server device which derives a skill value of a user concerning game play, including:
one or more processors having hardware, in which
the one or more processors
classify a plurality of activities into groups,
acquire lengths of playing time of a plurality of users for an activity from event data representing a start of the activity and event data representing an end of the activity,
generate distribution of playing time for each activity, in reference to the acquired plurality of lengths of playing time,
derive a skill value of each user for an activity, in reference to the playing time of each user for the relevant activity and the distribution of the playing time for the relevant activity, and derive a player skill value of each user concerning the game play for each activity group, in reference to a plurality of skill values which are derived for the plurality of activities.

### [Item 2]

The server device according to Item 1, in which
the one or more processors derive a player skill value of each user for each activity group, in reference to the plurality of skill values which are derived for the plurality of activities belonging to each activity group.

### [Item 3]

The server device according to Item 1, in which
the one or more processors calculate a difference between each of the skill values of the plurality of users which are derived for each activity and each of the player skill values of the plurality of users, and classify the plurality of activities into groups, in reference to a plurality of the differences calculated for each activity.

### [Item 4]

The server device according to Item 3, in which
the one or more processors classify the plurality of activities into groups, in reference to an absolute value of the plurality of the differences calculated for each activity.

### [Item 5]

The server device according to Item 4, in which
the one or more processors exclude an activity having the relatively great absolute value of the difference, among the activities belonging to one group, from the relevant group.

### [Item 6]

A server device which classifies a plurality of activities into groups, including:
one or more processors having hardware, in which
the one or more processors
acquire lengths of playing time of a plurality of users for an activity from event data representing a start of the activity and event data representing an end of the activity,
generate distribution of playing time for each activity, in reference to the acquired plurality of lengths of playing time,
derive a skill value of each user for an activity, in reference to the playing time of each user for the relevant activity and the distribution of the playing time for the relevant activity,
derive a player skill value of each user concerning game play, in reference to a plurality of skill values which are derived for the plurality of activities,
calculate a difference between each of the skill values of the plurality of users which are derived for each activity and each of the player skill values of the plurality of users, and
classify the plurality of activities into groups, in reference to a plurality of the differences calculated for each activity.

### [Item 7]

A server device which provides a user with information concerning an estimated playing time, including:
one or more processors having hardware, in which
the one or more processors
classify a plurality of activities into groups,
derive a skill value of the user for an activity which has been played by the user,
derive a player skill value of the user concerning game play for each activity group, in reference to a plurality of skill values which are derived for the plurality of activities,
set a class of the user for each activity group, in reference to the player skill value which is derived for each activity group, and notify the user of information concerning estimated playing time associated with the class to which the user belongs.

### [Item 8]

A skill value deriving method of deriving a skill value of a user concerning game play, including:
acquiring lengths of playing time of a plurality of users for an activity from event data representing a start of the activity and event data representing an end of the activity;
generating distribution of playing time for each activity, in reference to the acquired plurality of lengths of playing time;
deriving a skill value of each user for an activity, in reference to the playing time of each user for the relevant activity and the distribution of the playing time for the relevant activity;
classifying a plurality of activities into groups; and
deriving a player skill value of each user concerning the game play for each activity group, in reference to a plurality of skill values which are derived for the plurality of activities.

### [Item 9]

A classifying method of classifying a plurality of activities into groups, including:
acquiring lengths of playing time of a plurality of users for an activity from event data representing a start of the activity and event data representing an end of the activity;
generating distribution of playing time for each activity, in reference to the acquired plurality of lengths of playing time;
deriving a skill value of each user for an activity, in reference to the playing time of each user for the relevant activity and the distribution of the playing time for the relevant activity;
deriving a player skill value of each user concerning game play, in reference to a plurality of skill values which are derived for the plurality of activities;
calculating a difference between each of the skill values of the plurality of users which are derived for each activity and each of the player skill values of the plurality of users; and
classifying the plurality of activities into groups, in reference to a plurality of the differences calculated for each activity.

### [Item 10]

An information providing method of providing a user with information concerning an estimated playing time, including:
classifying a plurality of activities into groups;
deriving a skill value of the user for an activity which has been played by the user;
deriving a player skill value of the user concerning game play for each activity group, in reference to a plurality of skill values which are derived for the plurality of activities;
setting a class of the user for each activity group, in reference to the player skill value which is derived for each activity group; and notifying the user of information concerning estimated playing time associated with the class to which the user belongs.

### [Item 11]

A recording medium in which a program is recorded, the program for causing a computer to implement:
a function of acquiring lengths of playing time of a plurality of users for an activity from event data representing a start of the activity and event data representing an end of the activity;
a function of generating distribution of playing time for each activity, in reference to the acquired plurality of lengths of playing time;
a function of deriving a skill value of each user for an activity, in reference to the playing time of each user for the relevant activity and the distribution of the playing time for the relevant activity;
a function of classifying a plurality of activities into groups; and a function of deriving a player skill value of each user concerning game play for each activity group, in reference to a plurality of skill values which are derived for the plurality of activities.

### [Item 12]

A recording medium in which a program is recorded, the program for causing a computer to implement:
a function of acquiring lengths of playing time of a plurality of users for an activity from event data representing a start of the activity and event data representing an end of the activity;
a function of generating distribution of playing time for each activity, in reference to the acquired plurality of lengths of playing time;
a function of deriving a skill value of each user for an activity, in reference to the playing time of each user for the relevant activity and the distribution of the playing time for the relevant activity;
a function of deriving a player skill value of each user concerning game play, in reference to a plurality of skill values which are derived for a plurality of activities;
a function of calculating a difference between each of the skill values of the plurality of users which are derived for each activity and each of the player skill values of the plurality of users; and
a function of classifying the plurality of activities into groups, in reference to a plurality of the differences calculated for each activity.

### [Item 13]

A recording medium in which a program is recorded, the program for causing a computer to implement:
a function of classifying a plurality of activities into groups;
a function of deriving a skill value of a user for an activity which has been played by the user;
a function of deriving a player skill value of the user concerning game play for each activity group, in reference to a plurality of skill values which are derived for the plurality of activities;
a function of setting a class of the user for each activity group, in reference to the player skill values which are derived for each activity group; and
a function of notifying the user of information concerning estimated playing time associated with the class to which the user belongs.

### [Industrial Applicability]

The present disclosure can be applied to a technical field for processing event data concerning a game activity performed by a user.

### [Reference Signs List]

1: Information processing system
5: Server device
10: Information processing device
100: Processing unit
102: Communication unit
110: Game software
120: Event information acquiring section
122: Event data transmitting section
130: Game image generating section
140: Display processing section
150: Activity information acquiring section
200: Processing unit
202: Communication unit
210: Event data acquiring section
212: Playing time acquiring section
214: Skill value deriving section
220: Statistical processing section
222: Distribution generating portion
224: Class sorting portion
226: Representative value determining portion
228: Classifying portion
240: Information providing section
242: Class acquiring portion
244: Playing time extracting portion
246: Notifying portion
250: Event data recording section
252: Playing time recording section
254: Playing time distribution recording section
256: Skill value recording section
258: Representative value recording section
260: Activity description recording section
262: Activity group recording section

## Claims

1. A server device which derives a skill value of a user concerning game play, comprising:
an event data recording section which records pieces of event data concerning an activity performed by a plurality of users;
a playing time acquiring section which acquires lengths of playing time of the plurality of users for the relevant activity from event data representing a start of the activity and event data representing an end of the activity, each piece of event data being recorded in the event data recording section;
a statistical processing section which generates distribution of playing time for each activity, in reference to the acquired plurality of lengths of playing time;
a skill value deriving section which derives a skill value of each user for an activity, in reference to the playing time of each user for the relevant activity and the distribution of the playing time for the relevant activity; and
a classifying portion which classifies a plurality of activities into groups, wherein
the skill value deriving section derives a player skill value of each user concerning the game play for each activity group, in reference to a plurality of skill values which are derived for the plurality of activities.

2. The server device according to claim 1, wherein
the skill value deriving section derives a player skill value of each user for each activity group, in reference to the plurality of skill values which are derived for the plurality of activities belonging to each activity group.

3. The server device according to claim 1, wherein
the classifying portion calculates a difference between each of the skill values of the plurality of users which are derived for each activity and each of the player skill values of the plurality of users, and classifies the plurality of activities into groups, in reference to a plurality of the differences calculated for each activity.

4. The server device according to claim 3, wherein
the classifying portion classifies the plurality of activities into groups, in reference to an absolute value of the plurality of the differences calculated for each activity.

5. The server device according to claim 4, wherein
the classifying portion excludes an activity having the relatively great absolute value of the difference, among the activities belonging to one group, from the relevant group.

6. A server device which classifies a plurality of activities into groups, comprising:
an event data recording section which records pieces of event data concerning an activity performed by a plurality of users;
a playing time acquiring section which acquires lengths of playing time of the plurality of users for the relevant activity from event data representing a start of the activity and event data representing an end of the activity, each piece of event data being recorded in the event data recording section;
a statistical processing section which generates distribution of playing time for each activity, in reference to the acquired plurality of lengths of playing time;
a skill value deriving section which derives a skill value of each user for an activity, in reference to the playing time of each user for the relevant activity and the distribution of the playing time for the relevant activity; and
a classifying portion which classifies a plurality of activities into groups, wherein
the skill value deriving section derives a player skill value of each user concerning game play, in reference to a plurality of skill values which are derived for the plurality of activities, and
the classifying portion calculates a difference between each of the skill values of the plurality of users which are derived for each activity and each of the player skill values of the plurality of users, and classifies the plurality of activities into groups, in reference to a plurality of the differences calculated for each activity.

7. A server device which provides a user with information concerning an estimated playing time, comprising:
a classifying portion which classifies a plurality of activities into groups; and
a skill value deriving section which derives a skill value of the user for an activity which has been played by the user,
the skill value deriving section deriving a player skill value of the user concerning game play for each activity group, in reference to a plurality of skill values which are derived for the plurality of activities, and the server device further including
a class sorting portion which sets a class of the user for each activity group, in reference to the player skill value which is derived for each activity group, and
a notifying portion which notifies the user of information concerning estimated playing time associated with the class to which the user belongs.

8. A skill value deriving method of deriving a skill value of a user concerning game play, comprising:
a step of acquiring lengths of playing time of a plurality of users for an activity from event data representing a start of the activity and event data representing an end of the activity;
a step of generating distribution of playing time for each activity, in reference to the acquired plurality of lengths of playing time;
a step of deriving a skill value of each user for an activity, in reference to the playing time of each user for the relevant activity and the distribution of the playing time for the relevant activity;
a step of classifying a plurality of activities into groups; and
a step of deriving a player skill value of each user concerning the game play for each activity group, in reference to a plurality of skill values which are derived for the plurality of activities.

9. A classifying method of classifying a plurality of activities into groups, comprising:
a step of acquiring lengths of playing time of a plurality of users for an activity from event data representing a start of the activity and event data representing an end of the activity;
a step of generating distribution of playing time for each activity, in reference to the acquired plurality of lengths of playing time;
a step of deriving a skill value of each user for an activity, in reference to the playing time of each user for the relevant activity and the distribution of the playing time for the relevant activity;
a step of deriving a player skill value of each user concerning game play, in reference to a plurality of skill values which are derived for the plurality of activities;
a step of calculating a difference between each of the skill values of the plurality of users which are derived for each activity and each of the player skill values of the plurality of users; and
a step of classifying the plurality of activities into groups, in reference to a plurality of the differences calculated for each activity.

10. An information providing method of providing a user with information concerning an estimated playing time, comprising:
a step of classifying a plurality of activities into groups;
a step of deriving a skill value of the user for an activity which has been played by the user;
a step of deriving a player skill value of the user concerning game play for each activity group, in reference to a plurality of skill values which are derived for the plurality of activities;
a step of setting a class of the user for each activity group, in reference to the player skill value which is derived for each activity group; and
a step of notifying the user of information concerning estimated playing time associated with the class to which the user belongs.

11. A program for causing a computer to implement:
a function of acquiring lengths of playing time of a plurality of users for an activity from event data representing a start of the activity and event data representing an end of the activity;
a function of generating distribution of playing time for each activity, in reference to the acquired plurality of lengths of playing time;
a function of deriving a skill value of each user for an activity, in reference to the playing time of each user for the relevant activity and the distribution of the playing time for the relevant activity;
a function of classifying a plurality of activities into groups; and
a function of deriving a player skill value of each user concerning game play for each activity group, in reference to a plurality of skill values which are derived for the plurality of activities.

12. A program for causing a computer to implement:
a function of acquiring lengths of playing time of a plurality of users for an activity from event data representing a start of the activity and event data representing an end of the activity;
a function of generating distribution of playing time for each activity, in reference to the acquired plurality of lengths of playing time;
a function of deriving a skill value of each user for an activity, in reference to the playing time of each user for the relevant activity and the distribution of the playing time for the relevant activity;
a function of deriving a player skill value of each user concerning game play, in reference to a plurality of skill values which are derived for a plurality of activities;
a function of calculating a difference between each of the skill values of the plurality of users which are derived for each activity and each of the player skill values of the plurality of users; and
a function of classifying the plurality of activities into groups, in reference to a plurality of the differences calculated for each activity.

13. A program for causing a computer to implement:
a function of classifying a plurality of activities into groups;
a function of deriving a skill value of a user for an activity which has been played by the user;
a function of deriving a player skill value of the user concerning game play for each activity group, in reference to a plurality of skill values which are derived for the plurality of activities;
a function of setting a class of the user for each activity group, in reference to the player skill values which are derived for each activity group; and
a function of notifying the user of information concerning estimated playing time associated with the class to which the user belongs.
